Europäisches Patentamt

European Patent Office

Office européen des brevets

(11) Publication number: **0 487 769 A1**

## (12) EUROPEAN PATENT APPLICATION

(21) Application number: **90122723.1**

(22) Date of filing: **28.11.90**

(51) Int. Cl.⁵: **B23K 3/06**

(43) Date of publication of application:
**03.06.92 Bulletin 92/23**

(84) Designated Contracting States:
**AT BE CH DE DK ES FR GB GR IT LI LU NL SE**

(71) Applicant: **Lin, Hung-Min**
**NO. 19, Alley 9, Lane 208, Sec. 3, San Min Rd.**
**Taichung(TW)**

(72) Inventor: **Lin, Hung-Min**
**NO. 19, Alley 9, Lane 208, Sec. 3, San Min Rd.**
**Taichung(TW)**

(74) Representative: **Dickel, Klaus, Dipl.-Ing. et al**
**Julius-Kreis-Strasse 33**
**W-8000 München 60(DE)**

(54) Structure of electric soldering gun.

(57) An electric soldering gun, which comprises a soldering mechanism for melting and applying wire solder, and a hydraulic mechanism for moving a wire solder feeding mechanism to carry a wire solder to the soldering tip for soldering operation through the control of a press button which can be operated by the single hand which holds the soldering gun for operation.

Fig. 1

## BACKGROUND OF THE INVENTION:

The present invention is related to electric soldering guns, and more particularly to an electric soldering gun in which the feeding of solder is controlled by a press button through a hydraulic mechanism.

Tin soldering is an important procedure in manufacturing electronic produces for joining electronic components together. Various types of soldering tools have been used for melting and applying solder. Electric soldering gun is the most commonly used device for melting and applying solder in electronic industry. Either of the various types of conventional soldering tools is satisfactory in use. Common disadvantages of the conventional soldering tools are outlined hereinafter:

(a) It is inconvenient to operate. During soldering operation, one must have one hand holding a soldering tool and the other hand holding a solder for melting.

(b) It is difficult to accurately control the feeding amount of solder. Because solder is directly fed for melting by the hand, it is quite difficult to control the amount of melted solder.

(c) High working efficiency or soldering quality is difficult to achieve. Because accurate feeding amount of solder is difficult to control, soldering operation may have to be repeated at same location or same working piece. Therefore, working efficiency or soldering quality will be unfavorably affected.

## SUMMARY OF THE INVENTION:

The present invention has been accomplished to eliminate the aforesaid problems. It is one object of the present invention to provide an electric soldering gun for melting and applying solder, which can be conveniently operation by a single hand.

It is another object of the present invention to provide an electric soldering gun for melting and applying solder, which has a solder feeding mechanism for carrying a solder to the soldering tip for soldering operation.

It is still another object of the present invention to provide an electric soldering gun for melting and applying solder, which utilizes hydraulic mechanism to control a solder feeding mechanism to feed solder for soldering operation.

It is a yet further object of the present invention to provide an electric soldering gun for melting and applying solder, which can be conveniently controlled to supply accurate amount of solder for melting and apply melted solder to a working piece at accurate location for joining operation.

## BRIEF DESCRIPTION OF THE DRAWINGS:

The present invention will now be described by way of example, with reference to the annexed drawings, in which:

Fig. 1 is a sectional assembly view of an electric soldering gun embodying the present invention;

Fig. 2 is a partly sectional view thereof, illustrating the operation of the jacket in pushing and squeezing the wire solder retaining member;

Fig. 3 is a side elevational view of the wire solder retaining member; and

Fig. 4 is a front view of the wire solder retaining member.

## DETAILED DESCRIPTION OF THE PREFERRED EMBODIMENT:

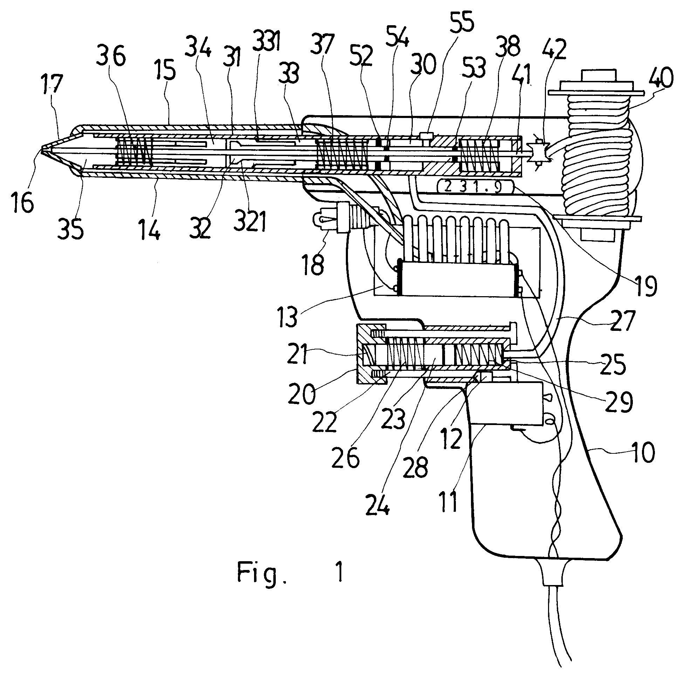

Referring to Fig. 1, an electric soldering gun comprises a housing 10 having fastened therein a solenoid switch 11 at its grip and and connected to a transformer 13 at an upper location via an ON/OFF control knob 12. There are provided inside the housing 10 two copper tubes 14, 15 separately extended from the transformer 13 and respectively connected to the soldering tip 17 of the soldering gun. An indicator lamp 18 and a LCD thermometer 19 are electrically connected to the soldering tip 17 for indication of soldering operation and the working temperature of the soldering tip 17. The aforesaid component parts form a soldering mechanism for soldering operation.

There is also provided a hydraulic mechanism in the housing 10 of the soldering gun, which is generally comprised of a press button 20, a plate spring 21, a sleeve 22, a hydraulic cylinder 23, a piston 24, an oil tank 25, two return springs 26 and 29, and a hydraulic oil conduit 27. When the press button 20 is pressed down to a first step to the plate spring 21 downward, the sleeve 22 is simultaneously moved downward. During downward movement of the sleeve 22 a retaining notch 28 on the sleeve 22 simultaneously pushes the control knob 12 to turn on the transformer 13 via the solenoid switch 11, so as to start heating operation. As soon as solder melting temperature (about 231.9 ) is indicated through the LCD thermometer 19, the press button 20 is further pressed down to a second step to move the piston 24 so as to force hydraulic oil from the oil tank 25 of the hydraulic cylinder 23 into the hydraulic oil conduit 27.

Inside the housing 10, there is also provided at the top a wire solder feeding mechanism which is comprised of an elongated socket 31, a wire solder retaining member 32, a jacket 33, a guide block 34, a heat insulator 35, and three return springs 36, 37 and 38, in which the front return spring 36 is disposed between the guide block 34 and the heat insulator 35, the intermediate return spring 37 is disposed between the jacket 33 and the elongated socket 31, and the rear return spring 38 is disposed between the wire solder retaining member 32 and the elongated socket 31.

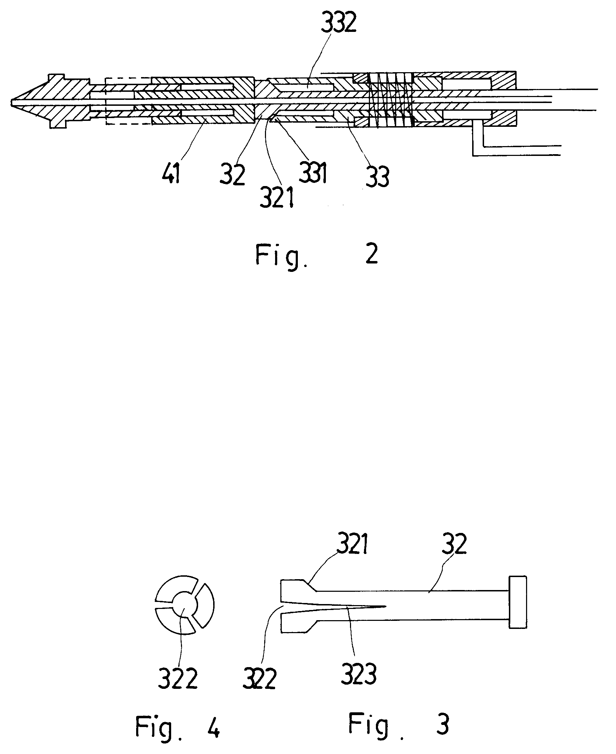

The afore-said soldering mechanism, hydraulic mechanism and wire solder feeding mechanism are incorporated in the housing 10 to form a soldering gun, the operation of which is outlined hereinafter. A reel of wire solder 40 is attached to the rear end of the housing 10 with the feeding end of the wire solder 41 thereon inserted from the rear end of the elongated socket 31 via a pulley wheel 42, into the wire solder retaining member 32, the guide block34 and the heat insulator 35 to further extend to the front nozzle 16 of the soldering tip 17. After wire solder is well set in position, the press button 20 is pressed down to a first step permitting the retaining notch 28 of the sleeve 22 to move the control knob 12 to ON position so as to turn on the transformer 13. Once the transformer 13 is turned on, the two copper tubes 14, 15 are simultaneously electrically heated. As soon as solder melting temperature (about 231.9 ) is indicated through the LCD thermometer 19, the press button 20 is further pressed down to a second step to move the piston 24 to squeeze the return spring 26. During backward movement of the piston 24, hydraulic oil in the oil tank 24 of the hydraulic cylinder 23 is forced to flow through the hydraulic oil conduit 27 into another oil tank 30, which is set inside the elongated socket 31, to force the jacket 33 to move forward. During forward movement of the jacket 33, its front tapered orifice 331 pushes and squeezes the front sloping portion 321 of the wire solder retaining member 32 (see Fig. 2 and 3) to firmly retain the wire solder 41 permitting the wire solder 41 to follow the jacket 33 to move through the central hole of the guide block 34 and the central hole of the heat insulator 35 to the nozzle of the soldering tip 17 where it is immediately melted into liquid phase for soldering operation. Once pressing force is released from the press button 20, the press button return spring 26 and the piston return spring 29 immediately force the press button 20 and the piston 24 to move back to original position. During backward movement, a suction force is produced to suck hydraulic oil back into the oil tank 25 of the hydraulic cylinder 23. As soon as hydraulic oil flows back into the oil tank 25 of the hydraulic cylinder 23, the return springs 36, 37 and 38 immediately respectively force the guide block 34, the jacket 33 and the wire solder retaining member 32 to move back to original position for next cycle of operation. Thus, the press button 20 can be pressed down again to carry the wire solder 41 to move forward for feeding.

As described above, the wire solder 41 is retained in the wire solder retaining member 32 which is pushed by the jacket 33 to carry the wire solder 41 toward the front nozzle 16 for soldering operation. During return movement of the wire solder retaining member 32, the wire solder 41 is released from the constrain of the wire solder retaining member 32 so that it can be further carried forward in next push button pressing control. To achieve this operation, the wire solder retaining member 32 and the jacket 33 must be specially designed. As illustrated in Figs. 2 through 4, the wire solder retaining member 32 is a substantially tube-like element having a front sloping portion 321 at its front split end for matching with the front tapered orifice 331 of the jacket 31 which is sleeved thereon. The front slopping portion 321 is longitudinally split into a plurality of unitary pieces flexibly separated by a plurality of longitudinal notches 323 and defining therein a mouth 322 in communication with the boring bore of the wire solder retaining member 32. When the jacket 33 is pushed forward, it immediately pushes the front slopping portion 321 of the wire solder retaining member 32 to squeeze the front split end of the wire solder retaining member 32 so as to close up the longitudinal notches 323 and reduce the size of the mouth 322 for clamping the wire solder 41 which passes therethrough. Thus, the wire solder 41 can be carried by the wire solder retaining member 32 when the wire solder retaining member 32 is continuously pushed by the jacket 33 to move forward. During backward movement of the jacket 33, squeezing force is released from the front slopping portion 321 of the front split end of the wire solder retaining member 32. Therefore, the wire solder 41 is released from the constraint of the wire solder retaining member 32 during the backward movement of the jacket 33 and will not be carried by the wire solder retaining member 32 to move backward. Further, oil seal rings 51, 52, 53, 54 are respectively fastened in the piston 24, the wire solder retaining member 32 and the jacket 33 at suitable locations for protection against oil leakage. There is also provided an oil intake hole 55 through which hydraulic oil can be conveniently filled into the hydraulic circulation system of the device. With respect to the heat insulator 35, it is to isolate the heat generated by the soldering tip 17 from transmitting inward. Therefore, it can be made of suitable non-metal materials such as ceramics, heat-resisting plastics or stone.

## Claims

1. An electric soldering gun, comprising a housing having fastened therein:

a soldering mechanism for soldering operation, comprising solenoid switch connected to a transformer controlled by an ON/OFF control knob to electrically heat a soldering tip through two copper tubes, with an indicator lamp and a LCD thermometer respectively connected thereto for indication of soldering operation and the working temperature of at said soldering tip;

a wire solder feeding mechanism for feeding a wire solder to said soldering tip for soldering operation, comprised of an elongated socket, a wire solder retaining member, a jacket sleeved on said wire solder retaining member, a guide block for guiding a wire solder, a heat insulator for isolating heat generated by said soldering tip from transmitting backward

a hydraulic mechanism for controlling the operation of said wire solder feeding mechanism, comprised of a press button, a plate spring, a sleeve, a hydraulic cylinder, a piston, two return springs, and a hydraulic oil conduit; and

characterized in that said press button can be pressed down to a first step to push said sleeve to move backward via said plate spring so as to turn on said transformer via said solenoid switch for heating said soldering tip via said copper tubes, and pressed down further to a second step to move said piston permitting said piston to squeeze hydraulic oil from said hydraulic cylinder into said hydraulic oil conduit for pushing said jacket to force said wire solder retaining member to carry a wire solder to said soldering tip for soldering operation.

2. The electric soldering gun of claim 1, which further comprises a reel of wire solder attached to the rear end of said housing at the top with the wire solder thereof extending through said wire solder feeding mechanism to said soldering tip for soldering operation through single hand control.

3. The electric soldering gun of claim 1, wherein said said sleeve has a retaining notch for controlling the operation of said solenoid switch during its forward and backward movement.

4. The electric soldering gun of claim 1, which further comprises a press button return spring and a piston return spring for automatically respectively pushing said press button and said piston to move back to original position once pressing force is released from said press button.

5. The electric soldering gun of claim 1, wherein said jacket has a tapered opening at the front.

6. The electric soldering gun of claim 1, wherein said wire solder retaining member has a front slip end for releasably retaining the wire solder from said reel of wire solder, said front slip end having a sloping portion with which said tapered opening of said jacket is releasably engaged.

7. The electric soldering gun of claim 1, wherein said wire solder feeding mechanism further comprises a plurality of return springs respectively for moving said guide block, said jacket and said wire solder retaining member back to original position upon return flow of hydraulic oil into said hydraulic cylinder.

8. The electric soldering gun of claim 1, wherein said heat insulator can be made of ceramics, heat-resisting plastics or asbestos for isolating said soldering tip from transmitting heat backward.

Fig. 1

332

41    32    331    33
321

Fig.    2

321    32

322    322    323

Fig.    4         Fig.    3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-1258086 (KLAUS SCHLITT)<br>* the whole document *<br><br>--- | 1-4 | B23K3/06 |
| A | GB-A-481669 (ANTONY CESARE ANSELMI)<br>* the whole document *<br><br>--- | 1-4 | |
| A | FR-A-2378595 (HOME SOLDER CORPORATION)<br>* page 2, line 3 - page 14, line 16; figures 1, 2, 5 *<br><br>----- | 1-8 | |

| | | | TECHNICAL FIELDS SEARCHED (Int. Cl.5 ) |
|---|---|---|---|
| | | | B23K |

The present search report has been drawn up for all claims

| Place of search | Date of completion of the search | Examiner |
|---|---|---|
| THE HAGUE | 02 JULY 1991 | HERBRETEAU D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P0401)